(19) Europäisches Patentamt
European Patent Office
Office européen des brevets

(11) EP 2 570 389 B1

(12) **EUROPEAN PATENT SPECIFICATION**

(45) Date of publication and mention of the grant of the patent:
**10.08.2016 Bulletin 2016/32**

(21) Application number: **10853166.6**

(22) Date of filing: **14.06.2010**

(51) Int Cl.:
***C02F 1/46*** *(2006.01)* ***C25B 9/02*** *(2006.01)*

(86) International application number:
**PCT/JP2010/003928**

(87) International publication number:
**WO 2011/158279 (22.12.2011 Gazette 2011/51)**

# (54) ELECTROLYTIC DEVICE AND METHOD FOR PRODUCING WEAKLY ACIDIC ELECTROLYSED WATER

ELEKTROLYTISCHE VORRICHTUNG UND VERFAHREN ZUR HERSTELLUNG VON SCHWACH SAUREM ELEKTROLYSIERTEM WASSER

DISPOSITIF D'ÉLECTROLYSE ET PROCÉDÉ DE PRODUCTION D'EAU ÉLECTROLYSÉE FAIBLEMENT ACIDE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.03.2013 Bulletin 2013/12**

(73) Proprietor: **Hocl Inc.**
**Fujisawa-shi, Kanagawa 252-0816 (JP)**

(72) Inventor: **DOI, Toyohiko**
**Fujisawa-shi, Kanagawa 252-0816 (JP)**

(74) Representative: **Manitz, Finsterwald & Partner GbR**
**Martin-Greif-Strasse 1**
**80336 München (DE)**

(56) References cited:
**WO-A1-2009/143629**
**JP-A- 2006 035 201**
**JP-A- 2009 028 671**
**JP-A- 2010 126 769**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an electrolytic apparatus and a method for producing slightly acidic electrolyzed water with a molecular hypochlorous acid component by electrolysis of a chlorine containing composition.

### Background

Various technologies for producing water containing products having oxidizing property by electrolysis of a solution of a chlorine containing composition are known in conventionalarts. Hereinafter, the water that contains electrolysis products of the chlorine containing composition is referred to "slightly acidic electrolyzed water". The slightly acidic electrolyzed water contains hypochlorous acid in a molecular state which is produced by the electrolysis of the chlorine containing composition as an oxidizing product and then it has high oxidizing performance. Such high oxidizing performance is utilized for high functional waters of sterilization, disinfection, deodorization, decolorization, hand washing, face cleansing, etc.

The aforementioned slightly acidic electrolyzed waters are generally produced by dissolving a water soluble chlorine containing composition into dilution water to prepare the solution thereof and then electrolyzing of the solution in electrolytic bath. Electrolysis system may be mainly categorized into a diaphragm type and diaphragm-less type. In an example of the diaphragm system, the solution obtained in the anodic compartment by electrolysis of salt solution is extracted as product. The obtained product is characterized by strong acidity due to hydrochloric acid generated in molars equal to the hypochlorous acid, therefore generally such solution is called as "strongly acidic electrolyzed water" (Patent Literature 1).

On the other hand, the techniques using the diaphragm-less electrolytic bath system includes the technology to generate sodium hypochlorite solution by electrolysis of sodium chloride solution (Patent Literature 2), and the technology to generate hypochlorous acid solution (Patent Literature 3) by the electrolysis of diluted hydrochloric acid and then diluting the electrolyzed solution with water.

The electrolytic bath for producing slightly acidic electrolyzed water with high oxidizing performance component has to continue long term stable electrolysis under the circumstances being contacting to high oxidization ingredients. Then it must satisfy specific requirements such as, for example, (1) leakage prevention of rich electrolytic solution generated in the electrolytic bath be required; (2) in addition to liquid leakage, leakage prevention of gas be required because the electrolyzed solution may be a supersaturated solution of chloride; and (3) even small amount of leakage may cause rusting of neighboring parts or instruments because the electrolyzed solution is highly concentrated chlorine containing solution.

Although the electrolysis is performed continuously in many cases, the operation is often started after predetermined downtime for various reasons, such as material supply, production facility adjustment and plant shutdown. When the operation is restarted after such shutdown of the electrolytic bath, initial electrolytic current may abnormally increase above a setting value. Fig. 12 shows a time course of electrolytic current when operation was restarted after 24 hours of downtime in conventional electrolytic bath. As shown in Fig.12, the electrolytic current decreases with course of the electrolytic time, and undergoes change around the setting current value in steady state. Extremely high current observed at brief time just after restarting the electrolysis, which was recorded, is considered to be initial charge current due to charging of the electrolytic cell working as a capacitor.

However, the gradually decreasing current continued several second after restarting, which is not the initial charge current, indicates that the actual current passing through the electrolytic bath is large, suggesting that the conductivity ($\rho$(rho)$^{-1}$: ($\Omega$(ohm)cm)$^{-1}$) in the electrolytic bath becomes high due to high concentration of the electrolyte. Flowing of high current for long time after the inrush current as shown in Fig. 12 may cause damages in the electrodes and the constant voltage power source, and lead to lifetime shorting of the electrodes and the power source. Moreover, when the electrolysis is performed under such high current state, it would result in unusually high concentration of chloride in the produced water; it may cause various problems in relation to environmental health and facility endurance such as nasty, rusting to metal, odor transfer to the target as well as abnormal shutdown due to power supply failure since high workload is applied on the constant voltage power source for the electrolysis.

Accordingly, in the conventional electrolytic bath for generating slightly acidic electrolyzed water with the electrolysis products of the chlorine containing composition, there exists a problem in that the initial electrolytic current becomes abnormally high when the electrolysis is restarted after the downtime of the operation so that costs in relation to apparatus, environmental health and facility become problematic.
WO 2009/143629 A1 discloses a method for decontaminating wastes containing toxic organic molecules and for degrading the toxid organic molecules, wherein the method comprises the steps mixing the wastes with a surfactant, extracting from the mixture an aqueous solution comprising micelles formed from the surfactants entrapping toxic organic molecules, filling an electrolytic cell with the aqueous solution and applying a current to the at least one pair of electrodes suitable to electro-oxidise the toxic organic molecules.

Prior Art Literatures

Patent Literature

Patent Literature 1: Japanese Patent Laid-open Publication No. H9-103786
Patent Literature 2: Japanese Patent Laid-open Publication No. 2001-170463
Patent Literature 3: Japanese Patent Laid-open Publication No. H10-128336

Summary of Invention

Technical Problem

The present invention, conceived to address the problems of the conventional arts described hereinbefore, has an object to provide an electrolytic apparatus and a method for producing slightly acidic electrolyzed water including a electrolysis products of a chlorine containing composition, that is capable of preventing abnormal increase of initial electrolytic current when the electrolysis is restarted after shutdown of electrolytic bath so as to reduce the costs in relation to apparatus, environmental health and facility and to allow stable continuous operation.

[Solution to Problem]

The present inventor has made intensive studies to overcome the above mentioned problems, it was found that the initial abnormal high current after the downtime depends on the period of the downtime and becomes higher as the period longer. And it was concluded that temporal change in the fluid condition is arisen in the electrolysis bath. During the operation of the electrolytic bath, diluted hydrochloric acid is supplied from the lower part of the electrolytic bath as the chlorine containing composition. And then the supplied diluted hydrochloric acid is subjected to the electrolysis between the electrodes in the electrolytic bath. Finally the electrolyzed diluted hydrochloric acid is discharged from the upper part of the electrolytic bath to outside. Accordingly, the lower part of the electrolytic bath always presents relatively high concentration of hydrochloric acid. On the other hand, during the downtime of electrolytic operation, the lower part of electrolytic bath presents relatively high concentration of hydrochloric acid while the upper part of electrolytic bath presents lower concentration of the hydrochloric acid concentration and higher concentration of the element chlorine and the hypochlorous acid due to the electrolysis, since the diluted hydrochloric acid supply is stopped in accordance with the termination of the electrolytic current.

By considering mass transfer under such circumstances, under appropriate pH condition for producing slightly acidic electrolyzed water, element chlorine and hypochlorous acid cannot be ionized, and then presenting lower conductivity. On the other hand, hydrochloric acid has extremely high conductivity. Accordingly, the lowest part of the electrolytic bath presents relatively high conductivity whereas the middle and the upper parts present relatively low conductivity. Because element chlorine (molecular weight = 71) and hypochlorous acid (molecular weight = 52.5) have larger molecular weight than hydrochloric acid (molecular weight 36.5), here, the fluid in the upper part of the electrolytic bath tends to have higher specific gravity than that in the lower part. When the electrolysis has terminated, the hydrochloric acid accumulated at the bottom and supply tube diffuses into the inside of the electrolytic bath so that the hydrochloric acid concentration throughout the electrolytic bath will be homogenized gradually by convection and molecular diffusion due to such inversion of specific gravity. Consequently, conductivity (ρ(rho)[1]) of electrolytic solution existed at electrode vicinity increases and hydrochloric acid concentration over the electrode region may be homogenized with course of time. Such scenario was considered to be one of the reasons that cause abnormally high initial electrolytic current in the production process of the slightly acidic electrolyzed water.

In view of the above-mentioned consideration, the present inventor completed the present invention by finding that the increase of the initial electrolytic current observed after the shutdown of the electrolytic bath operation was able to be substantially suppressed by degreasing amount of diffused chlorine containing composition such as diluted hydrochloric acid to the electrode vicinity during the downtime of the electrolysis.

According to the present invention, an electrolytic apparatus for producing acidic electrolyzed water having an acidic degree between pH 5 and ph 6.5 including hypochlorous acid may be provided by electrolyzing a chlorine containing composition containing chloride ions and then diluting the electrolyzed solution. The electrolytic apparatus includes:

a container providing a dilution water passage for diluting the electrolyzed solution;
a diaphragm-less unit electrolytic cell disposed in the container, the unit electrolytic cell being defined between a plurality of planar electrodes; and
an electrode holder frame defining the unit electrolytic cell, the electrode holder frame including an opening for providing the chlorine containing composition at a position corresponding to the unit electrolytic cell and a reservoir part fluid-communicated to the opening while retaining the chlorine containing composition prior to the supply of the chlorine containing composition to the unit electrolytic cell;
wherein total area S of the opening fluid-communicating between the reservoir and the unit electrolytic cell is not more than 10 $mm^2$, and Rv is from 0.1 to 8% wherein Rv represents the capacity ratio between the reservoir part and the total volume of the electrode gaps and both of outer surfaces of the outermost planar electrodes are cooled by the dilution water.

In another aspect of the present invention, it is preferable that the ratio of the capacity of the reservoir part to the total volume of the gaps between the electrodes be in a range from 0.1 to 4%.

In another aspect of the present invention, the chlorine containing composition may be selected from the group consisting of hydrochloric acid aqueous solution, chlorides of alkali metal or alkali earth metal and any mixture thereof.

Further according to the present invention, a method for producing acidic electrolyzed water having an acidic degree between pH 5 and pH 6.5 may be provided. The method includes the steps of: providing a hydrochloric acid aqueous solution and a chlorine containing composition into the aforementioned electrolytic apparatus; and applying potential to the diaphragm-less unit electrolytic cell defined between the plurality of the planar electrodes so that the chlorine containing composition is electrolyzed to generate the electrolyzed solution including hypochlorous acid.

In another aspect of the present invention, the chlorine containing composition may be a chlorine containing composition selected from the group consisting of hydrochloric acid aqueous solution, chlorides of alkali metal or alkali earth metal and any mixture thereof.

Advantageous Effects of Invention

According to the present invention, there can be provided an electrolytic apparatus and a method for producing slightly acidic electrolyzed water including electrolysis product of chlorine containing composition, that are capable of preventing the abnormal increase of the initial electrolytic current when the electrolysis is restarted after shutdown of electrolytic bath so as to reduce costs in relation to apparatus, environmental health and facility and to allow stable continuous operation.

Brief Description of Drawings

Fig.1 shows a schematic diagram of an electrolytic bath 100 according to the present embodiment.
Fig.2 shows a side view of the electrolytic bath 100 according to the present embodiment in the direction of arrow 'A' shown in Fig. 1.
Fig. 3 shows a schematic diagram of an electrolytic apparatus 300 according to the present embodiment.
Fig. 4 shows an enlarged view around a reservoir part 108 of the electrolytic bath 100 according to the present embodiment.
Fig.5 shows a graph indicating that initial electrolytic current increases in relation to downtime of electrolysis of the electrolytic apparatus 300.
Fig.6 shows a graph plotted the initial electrolytic current (A) against area of openings 107 for unit electrolytic cell under condition where the downtime (idling time) of the electrolysis was fixed to 30 hours.
Fig.7 shows a range in which the initial electrolytic current (A) is able to be limited appropriately in each experimental example.
Fig. 8 shows characteristics of the electrolytic apparatus according to the present embodiment under continuous operation.
Fig. 9 shows characteristics of the electrolytic apparatus according to the present embodiment under the continuous operation.
Fig. 10 shows characteristics of the electrolytic apparatus according to the present embodiment under the continuous operation.
Fig. 11 shows characteristics of the electrolytic apparatus according to the present embodiment under the continuous operation.
Fig. 12 shows a graph of the electrolytic current under the condition where the operation was restarted after downtime of 24 hours in the conventional electrolytic bath.

Description of Embodiments

Hereinafter, embodiments of the present invention will be described; however, the present invention is not limited to the embodiments described bellow. Fig.1 shows a schematic diagram of an electrolytic bath 100 according to the present embodiment. The electrolytic bath 100 accommodates each of elements for electrolyzing a chlorine containing compound in a container 115. The container 115 is provided with an electrode stack 101 and an electrode holder frame 110 therein. The electrode stack 101 is configured by stacking parallel a plurality of planar electrodes 101a. The electrode holder frame 110 holds the planar electrodes 101a constituting the electrode stack 101 over circumferential direction so as to define the electrode stack 101. In the present embodiment, the electrode stack 101 has five planar electrodes disposed in parallel. The outermost two electrodes are connected to terminals from a power source and both of outer surfaces of the outermost electrodes are disposed in contact with dilution water (insulating) for cooling, which is described later. The electrode stack 101 provides totally four cells between five planar electrodes and electrolyzes the chlorine containing composition solution flowing therethrough. The electrolysis space formed between the electrodes 101a working as an electrode pair is referred to a "unit electrolytic cell".

The electrode holder frame 110, holding the lower part of the electrode stack 101, is connected to a supply tube 104 for supplying the chlorine containing composition to the electrode stack 101. The supply tube 104 may be formed by corrosion resistant material. The supply tube 104 extends to the upper part of the electrolytic bath 100 and further extends to a reservoir (not shown in drawings) of the chlorine containing composition solution, which is diluted hydrochloric acid in the described embodiment, through a sealing element 106. The sealing element 106 is disposed at an upper plate 118 for sealing up the upper part of the electrolytic bath 100. A reservoir part 108 is formed in the electrode holder frame 110 under the electrode stack 101. Openings 107 are formed at the electrode holder frame 110 to attain fluid-communication between the reservoir part 108 and the unit electrolytic cell. The diluted hydrochloric acid is introduced into the reservoir part 108 from the supply tube 104, and then the diluted hydrochloric acid is introduced into the gaps of the unit electrolytic cells through the openings 107. During the operation of the electrolysis, the introduced diluted hydrochloric acid flows upward through the electrode stack 101 in response to the feeding pressure from the supply tube 104 while being subjected to the electrolysis.

On the other hand, the container 115 is provided with an inlet port 112 for introducing dilution water therein and an outlet port 113 for discharging slightly acidic electrolyzed water to the outside of the container 115 therefrom. The introduced water is used for diluting decomposed products of the diluted hydrochloric acid. The discharged slightly acidic electrolyzed water contains the diluted decomposition product.

Openings 109 are formed at the electrode holder frame 110 over the electrode stack 110. The electrolyzed solution generated by the electrode stack 101 is discharged to the inside of the container 115 from the electrode stack 101 through the openings 109. The discharged electrolyzed solution is diluted by the dilution water supplied from the inlet port 112 and then discharged from the outlet port 113 as the slightly acidic electrolyzed water. Hereinafter, the particular embodiment will be described by using the diluted hydrochloric acid as the chlorine containing composition solution; however the present invention is not limited to diluted hydrochloric acid.

The reservoir part 108 formed in the electrode holder frame 110 under electrode stack 101 reserves temporary the chlorine containing composition solution supplied from the supply tube 104 so as to stabilize the pressure and concentration thereof. Thus, the reservoir part 108 functions to supply the diluted hydrochloric acid into the plurality of the unit electrolytic cells with homogeneous flow rate as possible. The supply tube 104 is connected with one end of the reservoir part 108 through the sealing element 116. The reservoir part 108 has the openings 107 formed on the surface thereof facing to the planar electrode. The planar electrodes are held by the electrode holder frame 110 so that the opening 107 are inserted therebetween and then forming the unit electrolytic cell.

The bottom and the top of the container 115 are sealed by the upper plate 118 and a lower plate 120. The upper plate 118 receives two terminal electrodes 103 and the supply tube 104 inserted therethrough and is provided with a water sealing 105 and a sealing element 106 disposed at each insertion portion so as to establish sealing of contents in the container 115.

A process of producing slightly acidic electrolyzed water in the electrolytic bath 100 shown in Fig. 1 is explained as follow: The diluted hydrochloric acid as the chlorine containing composition is supplied from the supply tube 104 into each space between the planar electrodes through each opening 107 via the sealing element 116 and the reservoir part 108. The supplied diluted hydrochloric acid is then subjected to the electrolysis between the planar electrodes as passing through the electrode stack 101. The electrolyzed solution including the electrolyzed product is discharged to the inside of the container 115 from the opening 109 formed at the upper part of the electrode holder frame 110. On the other hand, the dilution water introduced into the inside of the container 115 through the inlet port 112 is mixed with the electrolyzed solution at the vicinity of exit of the openings 109 of the electrode holder frame 110 and is discharged from the outlet port 113 as the slightly acidic electrolyzed water. The discharged slightly acidic electrolyzed water is reserved into a reservoir of the slightly acidic electrolyzed water through discharge tube (not shown in drawings).

The planar electrodes 101a constituting the electrode stack 101 according to the present embodiment, are coated by electrode materials so that the surfaces working as anode are coated by iridium oxide and the surfaces working as cathode are coated by platinum. The gaps between the planar electrodes have a certain interval that enable us to apply the appropriate potential, and the interval may be set in a range from approximately 1 to 10 mm depending on particular applications.

The shape and the number of the openings 107 formed under the unit electrolytic cell are not limited to but may be rectangular shape, round shape, mesh form or pore form. The total area occupied under the unit electrolytic cell may affect seriously the initial electrolytic current when the electrolytic operation is restarted after shutdown. The relationship between the area of the openings 107 and the initial electrolytic current will be described later in detail. Also the reservoir part 108 provides a common supply passage for introducing the diluted hydrochloric acid into the gaps between the planar electrodes uniformly and stably and has a certain shape such as cylinder, cuboid or any other shapes in relation to configuration of the electrode stack 101. In the present embodiment, capacity ratio between the capacity of the reservoir part 108 and the total volume of the gaps between the electrodes, Rv, was found to greatly affect the initial electrolytic current in restarting the electrolytic operation after the shutdown.

Size of each part and each element may be changed in relation to facility volumes and throughput, and shape of each part may be modified in accordance with particular purpose, if necessary. The openings 107 of the lower part of the electrode holder frame 110 formed together with the reservoir part 108 may be formed as independent openings described above. Alternatively, the openings 107 may be provided by a porous plate or an unglazed plate having a large number of pores, within limits that would not cause lose of effectiveness according to the present embodiment. Also the material is not limited in particular. Furthermore, in stead of forming the openings 107 at the lower part of the electrode holder frame 110, the lower edge of the electrode holder frame 110 may be made of the aforementioned porous plate or the unglazed plate. Alternatively, such a porous plate may be disposed on the lower edge of the electrode holder frame 110 so as to cover the openings 107 as control member for controlling degree of opening.

Furthermore, the chlorine containing composition available to the present embodiment may include, in addition to the aforementioned hydrochloric acid, any water soluble chloride ion containing compositions such as sodium chloride, potassium chloride, calcium chloride, and may be used together with or added by sodium carbonate, sodium hydrogen carbonate, potassium carbonate or potassium hydrogen carbonate as buffer medium for stabilizing pH. In the present embodiment, the salts of chloride ions and alkali metal elements or alkali earth metal elements, and any mixture thereof may be used as the chlorine containing electrolyte.

The container 115 is made of a transparent rigid polyvinyl chloride in the present embodiment; however the container 115 is not limited to be transparent and may be made of any commodity plastics within limits to have water resistance and chlorine resistance, such as poly methyl methacrylate, poly sulfone, poly styrene, or poly carbonate. When transparency is not important, the container 115 may be made of any ceramics. A dilution water passage 111 is formed between the container 115 and electrode stack 101 while the dilution water supplied from the inlet port 112 flowing therethrough.

The dilution water continuously cools the outer surfaces of both outermost electrodes among the electrode stack 101 in contacting thereto as well as dilution so as to prevent temperature increases of the electrolytic bath 100 and electrode stack 101. In the present embodiment, it is preferable that the water temperature within the electrolytic bath 100 may be maintained at room temperature (from 20 to 30 Celsius degree) in order to suppress convective diffusion within the electrolytic bath 100 as possible. The reason may be considered that when the temperature within the electrolytic bath 100 increases, convection accompanied with the cooling is activated as well as diffusion transfer of the diluted hydrochloric acid from the reservoir part 108 to the unit electrolytic cell is also activated.

Here, operational conditions of the electrolytic bath 100 according to the present embodiment will be described below. The slightly acid electrolyzed water may preferably have the acidic degree between pH 5-pH 6.5 when the hydrogen ion concentration formed by the electrolysis of the chlorine containing composition is describe in terms of pH. When hydrogen ion concentration is no more than pH 4, chlorine gas may be extricated, that is undesirable in terms of environmental health. When hydrogen ion concentration is no more than pH 5, element chlorine ratio becomes higher. On the other hand, when hydrogen ion concentration is lower than pH 6.5 (this means pH value becomes high), hypochlorous chloride ion ratio becomes higher. It is not preferable that the hydrogen ion concentration becomes above pH 7 because trihalomethane may be generated by mixing with organic compounds in such condition.

The slightly acidic electrolyzed water generated in the present embodiment may contain molecular chlorine, hypochlorous acid, and hypochlorite ion as the electrolysis products and may preferably have acidity and biocidal property. Further the slightly acidic electrolyzed water according to the present embodiment may preferably have a certain concentration of free available chlorine ranging from 10 to 30 ppm in order to have sufficient biocidal effectiveness and to prevent generation of free chlorine gas causing problems in terms of environmental health.

Fig.2 shows a side view of the electrolytic bath 100 according to the present embodiment in the direction of arrow 'A' shown in Fig. 1. Fig.2 does not show a cross section since Fig.2 describes the container 115 as being transparent.

In the container 115, the electrode stack 101 is accommodated and the electrode holder frame 110 is disposed so as to surround circumference of the electrode stack 110 and then holding the electrode stack 101. The whole of the electrode stack 101 is fixed by a pedestal 114 disposed between the lower plate 120 and the electrode stack 101, and is connected to terminal electrodes 103 by both of outermost surfaces thereof at the upper potion, thereby enhancing stability in the container 115.

Furthermore, under the electrode stack 101, the diluted hydrochloric acid is supplied from the supply tube 104 into the reservoir part 108 through the sealing element 116. The supplied diluted hydrochloric acid flows through the inside of the unit electrolytic cell, which is composed of facing planar electrodes 101a shown in Fig.2 and the electrode holder frame 110, upwardly from the lower of the drawings. The electrolyzed solution containing the electrolyzed product is then discharged through the openings 109 formed at the uppermost end of the electrode stack 101. Then the electrolyzed solution is mixed with the dilution water flowing through the dilution water passage for diluting and discharged to the outside of the container 115 through the outlet port (not shown in the drawings).

Referring to Fig.3, the electrolytic apparatus 300 using the electrolytic bath 100 and the method for producing the slightly acidic electrolyzed water according to the present invention will be explained. The electrolytic apparatus 300 shown in Fig. 3 is equipped with the electrolytic bath 100 shown in Fig. 1 and Fig. 2, and controlled by a control apparatus 332 controlling overall controls such as the power supply, the supply of the diluted hydrochloric acid to the electrolytic bath 100, and open and shut of each valve. The dilution water may be tap water as long as it has high resistivity, distilled water, deionized water or ultra pure water in response to the particular purpose, if necessary. The dilution water is introduced into the dilution water passage 111 in the electrolytic bath 100 via a solenoid valve 320, a flow switch 321, a constant flow valve 322 and a check valve 323. The solenoid valve 320 is used for controlling of dilution water supply. The flow switch 321 receives signals for avoiding discharge of chlorine solution having abnormally high concentration due to unexpected subsiding and shutdown of water supply in the container 115 while measuring flow rate of the dilution water.

The constant flow valve 322 controls flow rates of the hydrochloric acid and the dilution water in order to regulate throughput and available chlorine concentration of the slightly acidic electrolyzed water. The check valve 323 is disposed in order to prevent backward flow of the electrolyzed solution from the electrolytic bath over the check valve 323 to damage the disposed instruments. A diluted hydrochloric acid pump 325 draws predetermined amount of the diluted hydrochloric acid from a diluted hydrochloric acid tank 324 to supply into the reservoir part 108 disposed at the under part of the electrolytic bath 100 through the supply tube 104. The supplied diluted hydrochloric acid to the reservoir part 108 is introduced into the electrode stack 101 of the electrolytic bath 100 through openings 107 after stabilizing pressure and velocity of flowing.

The electrode stack 101 is applied with direct current by using a DC power source 331 to electrolyze the diluted hydrochloric acid flowing into the gaps between the planar electrodes 101a thereof. On the power supply line from the DC power source to the electrolytic bath 100, a current sensor 330 is disposed to monitor current value constantly. The electrolyzed solution generated by the electrolysis at the electrolytic bath 100 is discharged to the dilution water passage 111 from the openings 109 of the upper part of the electrolytic bath 100, mixed with the dilution water, and then discharged into the passage 329. A static mixer 327 is disposed on the supply line. The discharged electrolyzed solution is subjected to homogenize through the static mixer 327 and discharged as the slightly acidic electrolyzed water.

The electrolytic apparatus 300 shown in Fig.3 is controlled by the control apparatus 232 in the following manner. When the current value monitored by the current sensor 330 becomes below predetermined lower limit of the current value, the hydrochloric acid pump 325 will be started to supply the diluted hydrochloric acid to the electrolytic bath 100 so as to increase the conductivity at the gap between the planar electrodes 101a and to raise the current value. Furthermore, when the current value becomes above predetermined upper limit of the current value, the hydrochloric acid pump 325 will be stopped to terminate supply of the diluted hydrochloric acid so as to decrease the conductivity so that the current value becomes below the predetermined current value. By maintaining the electrolysis current around appropriate setting value in a range between the upper and lower limits of the current value in such manner, the electrolyzed solution having constant available chlorine concentration is generated. And then, the generated electrolyzed solution is mixed with constantly supplied raw water to produce the slightly acidic electrolyzed water having constant available chlorine concentration.

Furthermore, the control apparatus will terminate the electrolysis of the electrolytic apparatus 300 when following abnormal states are occurred:

(1) where current becomes above the upper limit value or below the lower limit value lasts over a predetermined period;
(2) where the supply of the dilution water is stopped or becomes lower flow rate than predetermined threshold.

When the above mentioned conditions (1), (2) are satisfied, the control apparatus 332 will terminate the power supply and diluted hydrochloric acid supply so that any inconvenience on the apparatus and the environmental health are prevented.

In the present embodiment, slightly acidic electrolyzed water is produced by using the electrolytic apparatus 300 and the production method described above. By the way, the electrolytic apparatus 300 is not always operated continuously and may be suspended for predetermined period in terms of operational environment, throughput, facility volume as well as maintenance. In such case, in the electrolytic bath 100 according to the present embodiment, the electrolysis may be restarted after shutdown of power supply and fluid supply to the electrolytic bath 100. When electrolysis is started after predetermined downtime, the initial electrolytic current may abnormally increase and such high current may exceed the upper limit of the current value on a scale of several minutes or may continue around the upper limit thresholds, thereby preventing smooth restart of the electrolysis.

Fig.4 shows an enlarged view around the reservoir part 108 of the electrolytic bath 100 according to the present embodiment. Fig.4(a) shows an enlarged view around the lower part of the electrode holder frame 110 of the electrolytic bath 100 shown in Fig.1. Whereas Fig.4(b) shows an enlarged cross section along with dash line B-B' shown in Fig.4(a). As shown in Fig.4 (a), the opening 107 and the planer electrodes 101a at both sides of the opening 107 are disposed adjacent to the reservoir part 108. The planar electrode 101a is inserted into a slot formed at the electrode holder frame 110 for holding. After retaining in the reservoir part 108 at once, the diluted hydrochloric acid flows into the gap between the planar electrodes 101a through openings 107 in response to feeding pressure. The planar electrodes perform electrolysis of the diluted hydrochloric acid flowing therebetween to produce molecular chlorine hypochlorous acid and hypochlorite ion as the electrolysis products. The electrolyzed diluted hydrochloric acid is then discharged from the upper part of the planar electrodes 101a together with remaining hydrochloric acid to generate the slightly acidic electrolyzed water.

Fig.4(b) shows the cross sectional configuration along with dash line B-B' shown in Fig. 4(a). As shown in Fig. 4(b), the reservoir part 108 is formed in the electrode holder frame 110 and electrode holder frame 110 extends on the upper part of the reservoir part 108. The electrode holder frame 110 is provided with slots 110b for holding the planar electrodes 101a. The planar electrodes 101a are received by the slots 110b to be held. The openings 107 are formed at two locations shown in Fig. 4(a) with round shape in the described embodiment in order to flow the diluted hydrochloric acid from the reservoir part 108 into the gap between the planar electrodes.

Here, by using the electrode configuration shown in Fig.4, let us consider mass balance under circumstances where the electrolytic operation is stopped. When the electrolytic operation is stopped, both of diluted hydrochloric acid supply and electrolytic current are terminated as described above. In such case, the hydrochloric acid not yet electrolyzed may be remained in the reservoir part 108. On the other hand, in the gap between the planar electrodes 101a constituting the electrode stack 101, molecular chlorine, hypochlorous acid and hypochlorite ions as the products of electrolysis remain together with hydrochloric acid. Since element chlorine (molecular weight = 71) and hypochlorous acid (molecular weight = 52.5) have larger molecular weight than hydrochloric acid (molecular weight =36.5), so inversion of specific gravity of fluid through the electrode stack 101 is arisen during downtime of the electrolysis.

Sequentially, convective diffusion would be occurred inside the cell formed between the planar electrodes 101a. And the diluted hydrochloric acid staying in the reservoir part 108 tends to diffuse into the cell. Since hydrochloric acid is strongly dissociated in comparison with molecular chlorine and hypochlorous acid, it was concluded that increase of hydrochloric acid concentration enhances the conductivity in the cell, and consequently the initial electrolytic current after restarting the electrolysis would be increase. When the abnormal current value in restarting the electrolytic operation exceeds the upper limit, smooth start of electrolytic operation may be prevented. Even through the abnormal current value does not exceed the upper limit, long term continuation of the abnormally high current may causes bad influences in terms of heat generation of the electrode stack 101, rusting of the parts and the like.

Fig.5 shows a graph indicating that the initial electrolytic current increases in relation to the downtime of the electrolysis of the electrolytic apparatus 300. In Fig.5, horizontal axis represents the downtime of the electrolytic operation (idling time (hrs)) whereas the vertical axis represents the initial electrolytic current (A). Setting condition of the electrolytic bath 300 was as follows: the setting current value was 3 A; the openings area was 25 $mm^2$ (2.5 mm x 10 mm), the diluted hydrochloric acid concentration was 6 %, the reservoir part capacity was 10 $cm^3$. In order to exclude influence on the initial electrolytic current of the initial charge current generated immediate after restart of the electrolysis for charging the electrolytic cell, the current value recorded three seconds after starting the electrolysis was used as the initial electrolytic current value.

Fig. 5 indicates that the initial electrolytic current increases as the electrolysis downtime increases and reaches 9 A, which is maximum allowable current of the power source, at the downtime of 20 hours. The reason is considered that the conductivity through the unit electrolytic cell increases as the electrolysis downtime increases so that the current reaches the rated maximum current of the power source. Variation of the conductivity through the electrolytic cell causes a trouble on the stable initiation of production for the slightly acidic electrolyzed water. In addition, the variation is expected to cause bad influences on each part and each element of the electrolytic apparatus 300 from long term view point. Therefore, it is necessary to suppress such variation of the conductivity through the electrolytic cell as possible.

Fig.6 shows a graph plotted the initial electrolytic current (A) against the total area of the openings 107 for unit electrolytic cell under condition where the downtime of the electrolysis (idling time) was fixed to 30 hours. In Fig.6, the openings 107 having horizontally long rectangular shape were formed between each planar electrode. As shown in Fig. 6, it was found that the initial electrolytic current relates to the total area of the opening per unit electrolytic cell, and the value of the initial electrolytic current increases as the opening area becomes enlarge. In the case shown in Fig.6, linearity seems to be degraded above approximately 17.5 $mm^2$ of the openings area. The reason may be considered that the current control by the constant voltage power source is initiated above approximately 17.5 $mm^2$.

In the production line, electrolysis may be shutdown at consecutive holidays such as Saturday and Sunday, it is desirable to initiate the electrolysis to produce the slightly acidic electrolyzed water without any troubles at least several tens of hours after the shutdown of the electrolysis. Therefore, it is preferable that the area of the openings 107 for fluid-communicating to the reservoir part 108 and the electrolytic cell (total area / unit electrolytic cell area) be limited without deterioration of productivity so that the initial electrolytic current becomes lower enough than limited output current of the power source at least several tens hours after the shutdown.

In the described embodiment, it is preferable that the total area of the openings 107 may range from 1 to 15 $mm^2$ for suppressing the initial electrolytic current. It is further preferable that the total area of the openings 107 may range from 2 to 15 $mm^2$ in terms of initial electrolytic current stability and productivity.

The increment of the initial electrolytic current is also related to absolute amount of the diluted hydrochloric acid containing in the reservoir part 108. The reason may be considered that the amount of hydrochloric acid diffusing into the electrolytic cell after the shutdown of electrolysis increase as the capacity of the reservoir part 108 enlarges. On the other hand, small capacity of the reservoir part 108 cause bad influence on the current stability under the electrolytic operation and the formulation stability of the slightly acidic electrolyzed water.

The present inventor has studied intensively and consequently, it was found that the initial electrolytic current may be suppressed within allowable range by setting the capacity ratio between the reservoir part 108 and total volume of the electrode gaps, Rv, within the range from 0.1 to 8 %. It is preferable that the capacity ratio, Rv, may range from 0.1 to 4 % for suppressing the initial electrolytic current stably. The present inventor also found that the initial electrolytic current may be suppressed effectively by limiting the product of the total area of the openings 107 per unit electrolytic cell, S, and the capacity ratio between the reservoir part 108 and the total volume of the electrode gaps, Rv, within predetermined range. In the present embodiment, it was found that when the total area S and the capacity ratio Rv are satisfied the following equation (1), the initial electrolytic current can be suppressed within the set value to be +2A even if approximately 30 hours has passed after the shutdown of the electrolytic operation, where S represents the total area of the openings 107 per unit electrolytic cell and Rv represents the capacity ratio between the reservoir part 108 and the total volume of the electrode gaps.

(Equation 1)

$$S \times Rv \leqq 4.00 / N \qquad (1)$$

In the equation (1), S represents the total area ($mm^2$) of the opening, Rv represents the ratio between the capacity of the reservoir part and the total volume of the gaps between the electrodes (given by real number ranging from 0 to 1), the current value three seconds after starting the electrolysis is employed as the value of the initial electrolytic current in order to avoid influence of the initial charge current, and N represents the concentration (weight %) of the hydrochloric acid used.

In the present embodiment, the initial electrolytic current (A) after identical downtime gets lower by decreasing the total area of the openings 107 per unit electrolysis cell. Also the initial electrolytic current (A) after identical downtime is able to be suppressed by reducing the capacity of the reservoir part in comparison with the total volume of the electrode gaps so that the capacity ratio that is equal to {(capacity of the reservoir part/ total volume of the electrode gaps) *100} is set to be small.

On the other hand, when the total area of the openings 107 per unit electrolytic becomes smaller, throughput may be deteriorated. Also it is considered that there exists a lower limit of the capacity ratio of the reservoir part depending on configuration of the electrode stack 101. When the capacity ratio of the reservoir part is not controlled, allowable range between productivity and the initial electrolysis current may extremely be narrowed, causing a problem on apparatus stability and quality stability of the slightly acidic electrolyzed water.

Accordingly, in order to satisfy three features including the suppression of the initial electrolytic current, the stability of the control and the stability of the quality concurrently, it is preferable that the total area S of the openings 107 per unit electrolytic cell may range from 2 to 10 $mm^2$ and the capacity ratio and the concentration of the diluted hydrochloric acid may be satisfied equation (1) as described above. In the present invention, when the reservoir part 108 and electrolytic cell are separated by porous material such as porous plate, ratio of opening of the porous material (ratio of opening area per unit area of the porous material) may range from approximately 2 % to 15 %, more preferably from approximately 2% to 10 %.

The present invention has been explained in accordance with the aforementioned embodiments, and hereinafter the present invention will be explained further in detail using particular examples. However, the present invention is not limited to the particular examples described hereinbelow.

Examples

(Experimental Example 1)

In order to investigate behaviors of the initial electrolytic current, the electrolytic apparatus shown in Fig.3 was constructed and the initial electrolytic current was measured under various total areas of the openings 107 per unit electrolytic cell. The capacity ratio between the reservoir part and the total electrode gaps was fixed to approximately 8 % through the example. A constant voltage power source, PBF75-9 produced by COSEL CO., LTD and a measurement system produced by SHIMA ELECTRONICS INC., which utilizes the precision resistor for current measurements, were used. The electrolytic bath was constructed as four cells. A hydrochloric acid agent (grade of food additives obtained from TAKASUGI PHAEMACEUTICAL CO., LTD.) was used as chlorine containing compound to prepare a solution of 6 wt% concentration. Tap water was used as the dilution water and flow late thereof was set to be 30 L/hr. The rated current value was set to 3 A.

The electrolytic bath was made of rigid polyvinyl chloride. And the electrolytic bath was entirely immersed in the dilution water flowing through a dilution water passage gap that is formed in a gap between the crust of the electrolytic bath and the electrolytic bath. The outer surfaces of the outermost electrodes of the electrolytic bath were exposed so as to be cool by the dilution water constantly and the whole of the electrolytic bath was maintained under room temperature (approximately 23 Celsius degrees) during the electrolysis.

In the electrolytic apparatus described before, various electrode holder frames were prepared by changing the openings area for fluid-communicating to the electrolytic cell and the reservoir part. The electrode holder frames were provided with rectangular shape openings of 2.5x10 (25 $mm^2$) square, 2.5x7 $mm^2$ square and 2.5x4 $mm^2$ square, and round shaped openings of 3 mm diameter., 2 mm diameter, 1.5 mm diameter and 1 mm diameter, respectively. Productions of the slightly acidic electrolyzed water were performed under the setting current value of 3 A and the diluted hydrochloric acid of 6 % concentration to investigate variations of the initial electrolytic current after 30 hours.

The electrolysis was restarted after 30 hours downtime of the electrolytic operation. Amperage three seconds after the restart of the electrolysis was employed as the initial electrolytic current in order to avoid influence of initial charge current. The results are shown in table 1.

(Table 1)

| Examples | Opening size (mm) | Area ($mm^2$) | Initial amperage aft. 30hr (A) |
|---|---|---|---|
| Comparative Example 1 | 2.5×10 | 25 | 9 |
| Comparative Example 2 | 2.5×7 | 17.5 | 8.8 |
| Example 1 | 2.5×4 | 10 | 6. 2 |
| Example 2 | ϕ 3 | 7 | 5. 7 |
| Example 3 | ϕ 2 | 3 | 4. 2 |
| Example 4 | ϕ 1.5 | 1.8 | 3.9 |
| Example 5 | ϕ 1 | 0.8 | 4. 3 |

As shown in table 1, the initial electrolytic current was able to be suppressed as low as the area of the openings 107 became small and the electrolysis was able to be restarted smoothly.

(Experimental Example 2)

<Relationship between Capacity of Reservoir part and Total Volume of Electrode Gaps>
By using the electrolytic apparatus and electrolytic condition used in the experimental example 1, experiments were carried out under similar conditions except for the capacity of the reservoir part 108 to the capacity of the electrode gaps. The capacity was varied as 0.42%, 0.83%, and 2.1%. The relationship of ratio between the capacity of the reservoir part and the total volume of the electrode gaps {(the capacity of reservoir part / total volume of the electrode gaps)x100} was investigated. The experimental conditions and the results thereof are shown in table 2.

(Table 2)

| item | condition | | |
|---|---|---|---|
| Gap Volume between Electrodes (ml) | 30 | | |
| Hydrochloric Acid Concentration (%) | 6 | | |
| Idling time (hors) | 30 | | |
| Opening Area Size ($mm^2$) | 25 | | |
| Reserving part Capacity (ml) | 0.5 | 1.0 | 2. 5 |
| Capacity Ratio (%) | 0.42 | 0.83 | 2. 1 |
| Initial Amperage (A) | 4.3 | 5. 1 | 9.2 |
| Examples | Example | Example | Comparative Example |

As shown in table 2, even if the total area of the openings were identical, the initial electrolytic current was degreased by limiting the capacity of the reservoir part. Fig.7 shows the result of the experimental examples 1 and 2. In the Fig.7, the curve is given by equation (1) and the lower region of the curve in the present embodiment represents allowable range of suppressing the initial electrolytic current after downtime of at least 30 hours. Accordingly, Fig. 7 corresponds to the range (the region under the curve) capable of limiting the initial electrolytic current appropriately for each experimental example. In Fig. 7, the region, S is less than or equal to 2 $mm^2$, corresponds to the region where the capacity of the reservoir part exceeded the total volume of the electrode gaps. By referring the Fig. 7, in the region where the total area of the openings 107 is greater than 10 $mm^2$, the allowable range of the capacity ratio Rv apparently became extremely narrow, and then causing problems in terms of apparatus stability and quality stability of the slightly acidic solution.

Based on the above described experimental examples, in view of satisfying three features including the suppression of the initial electrolytic current, the stability of the control and the stability of the quality concurrently, by setting the total area S of the openings 107 per unit cell to be in a range from 2 $mm^2$ to 10 $mm^2$, the ratio between the electrode gaps volume and the reservoir part capacity was able to satisfy the above mentioned equation (1) in practical range.

(Experimental example 3)

<Comparison of Continuous Operating Characteristics>

The electrolytic apparatus described in the experimental example 1, 2 and Fig.3 was used, the electrolytic bath was provided with planar electrodes of 50 mm x 200 mm square, 1 mm thickness. The electrodes were coated so that surfaces working as anode were covered by iridium oxide and surfaces working as cathode were covered by platinum. Interval between the electrodes was designed to be 2 mm. The electrodes were fixed to the electrode holder frame with the circumference thereof and inserted into gaps of 1 mm thickness and 3 mm depth formed in the electrode holder frame. The electrode holder frame was made of the rigid polyvinyl chloride. The electrolytic bath was constructed as four cells configuration. The total volume of each electrode gap is 17 $cm^3$. The reservoir part was shaped cylindrical shaped hole of 3 mm diameter and 17 mm depth to have capacity of 0.12 $cm^3$. The ratio of the reservoir part capacity to the total volume of the electrode gaps was approximately 0.18 %.

The openings for fluid-communicating to the reservoir part and the unit electrode cell were designed to be round shape having 1.5 mm diameter, and two openings were disposed in the 1 mm interval per each unit electrolytic cell. The total area of the openings was 3.5 $mm^2$. The hydrochloric acid solution of 6 wt% concentration added with 100 ppm of sodium carbonate (first class grade reagent, obtained from KANTO CHEMICAL CO. LTD.) was supplied as ingredients into the electrolytic bath with the configuration described above. The slightly acidic electrolyzed water was produced under the condition shown in following Table 3.

(Table 3)

| Setting Items | Set Values |
|---|---|
| Electrolytic current (A) | 3 |
| Electrolytic voltage (V) | 8.8 |

(continued)

| Setting Items | Set Values |
|---|---|
| Dilution Water Flow Rate (L/hr) | 300 |

Hereinbelow, the continuous operating process of the present experimental examples will be explained by referring Fig.3. The raw water was introduced to the dilution water passage 111 of the electrolytic bath through the solenoid valve 320, the flow switch 321, the constant flow rate valve 322 and the check valve 323.

The diluted hydrochloric acid pump 325 was used to draw required amount of the diluted hydrochloric acid from the diluted hydrochloric acid tank 324 to supply into the electrode stack 101 through the reservoir part at the lower part of the electrolytic bath. Direct current was applied to the electrolytic bath by the DC power source 331 and the diluted hydrochloric acid supplied through the electrode stack 101 was subjected to electrolysis by the electrode stack 101. On the power supply line from the DC power source to the electrolytic bath, the current sensor 330 was disposed to monitor amperage constantly. The electrolyzed solution generated by the electrolysis at the electrolytic bath 100 was discharged from the openings 109 of the upper part of the electrolytic bath 100 to the dilution water passage, and then mixed with the dilution water. And then the mixed electrolyzed solution was discharged into the passage 329 and passed through the static mixer 327 disposed on the supply line to homogenize. Accordingly the slightly acidic electrolyzed water was produced.

The current value was measured by an amperometer and pH value of the produced water of 5 L was measured by using pH grass electrode (JIS-Z8802-84) with continuous sampling. The available chlorine concentration of same sample was measured by iodometric titration (JIS-K0102.33.3). The results are shown in Figs. 9-11. As shown in Fig. 8, it is clear that both of the amperage (A), the available chlorine concentration and the pH were stably controlled. Each parameter in restarting after predetermined downtime is shown in Figs. 9-11. Fig. 9 shows variations of the electrolytic current, Fig. 10 shows variation of the available chlorine concentration and Fig.11 shows variation of the pH in restarting after downtime of 1 to 48 hours. As shown in Figs. 9-11, it was demonstrated that the electrolytic apparatus according to the present invention is capable of producing fine characteristics slightly acidic electrolyzed water stably without any practical problems on the initial electrolytic current even after downtime of 48 hours.

Industrial Applicability

As described hereinabove, according to the present invention there can be provided an electrolytic apparatus and a method for producing slightly acidic electrolyzed water including electrolysis product of chlorine containing composition, that are capable of preventing the abnormal increase of the initial electrolytic current when the electrolysis is started after shutdown of electrolytic bath so as to reduce costs in relation to apparatus, environmental health and facility and to allow stable continuous operation.

Reference Signs List

100 electrolytic bath
101 electrode stack
101a planar electrodes
103 electrode terminal
104 supply tube
105 water sealing
106 sealing element
107 openings
108 reservoir part
109 openings
110 electrode holder frame
110a electrode holder frame
110b slots
111 dilution water passage
112 inlet port
113 outlet port
114 pedestal

| | |
|---|---|
| 115 | container |
| 116 | sealing element |
| 118 | upper plate |
| 120 | lower plate |
| 300 | electrolytic apparatus |
| 311 | dilution water passage |
| 320 | solenoid valve |
| 321 | flow switch |
| 322 | constant flow valve |
| 323 | check valve |
| 324 | diluted hydrochloric acid tank |
| 325 | diluted hydrochloric acid pump |
| 327 | static mixer |
| 328 | dilution water passage |
| 329 | passage |
| 330 | current sensor |
| 331 | DC power source |
| 332 | control apparatus |

## Claims

1. An electrolytic apparatus for producing acidic electrolyzed water having an acidic degree between pH 5 and pH 6.5 including hypochlorous acid by electrolyzing a chlorine containing composition containing chloride ions and then diluting electrolyzed solution, the electrolytic apparatus comprising:

   a container providing a dilution water passage for diluting the electrolyzed solution;
   a diaphragm-less unit electrolytic cell disposed in the container, the unit electrolytic cell being defined between a plurality of planar electrodes; and
   an electrode holder frame (110) defining the unit electrolytic cell, the electrode holder frame comprising an opening (107) for providing the chlorine containing composition at a position corresponding to the unit electrolytic cell and a reservoir part (108) fluid-communicated to the opening while retaining the chlorine containing composition prior to the supply of the chlorine containing composition to the unit electrolytic cell;
   wherein total area S of the opening fluid-communicating between the reservoir part and the unit electrolytic cell is not more than 10 $mm^2$ and Rv is from 0.1 to 8% wherein Rv represents the capacity ratio between the reservoir part and the total volume of the electrode gaps and both of outer surfaces of the outermost planar electrodes are cooled by the dilution water.

2. The electrolytic apparatus according to Claim 1, wherein at least two openings are disposed per unit electrolytic cell.

3. The electrolytic apparatus according to any one of Claims 1 or 2, wherein the openings are defined by pores of a porous material.

4. The electrolytic apparatus according to any one of Claims 1 to 3, wherein the ratio of the capacity of the reservoir part to the total volume of the gaps between the electrodes is in a range from 0.1 to 4%.

5. The electrolytic apparatus according to any one of Claims 1 to 4, wherein the chlorine containing composition is selected from the group consisting of hydrochloric acid aqueous solution, chlorides of alkali metal or alkali earth metal and any mixture thereof.

6. A method for producing acidic electrolyzed water having an acidic degree between pH 5 and pH 6.5, the method comprising the steps of:

   providing a hydrochloric acid aqueous solution and the chlorine containing composition into the electrolytic apparatus according to any one of claims 1 to 8; and
   applying potential to the diaphragm-less unit electrolytic cell defined between the plurality of planar electrodes so that the chlorine containing composition is electrolyzed to generate the electrolyzed solution including hypochlorous acid.

7. A method for producing slightly acidic electrolyzed water according to claim 6, wherein the chlorine containing composition is a chlorine containing composition selected from the group consisting of hydrochloric acid aqueous solution, chlorides of alkali metal or alkali earth metal and any mixture thereof.

## Patentansprüche

1. Elektrolysevorrichtung zur Erzeugung von saurem elektrolysiertem Wasser mit einem Säuregrad zwischen pH 5 und pH 6,5, das hypochlorige Säure enthält, indem eine chlorhaltige Zusammensetzung, die Chloridionen enthält, elektrolysiert und dann die elektrolysierte Lösung verdünnt wird, wobei die Elektrolysevorrichtung umfasst:

   einen Behälter, der einen Verdünnungswasserdurchgang zum Verdünnen der elektrolysierten Lösung bereitstellt;
   eine membranlose Einheitselektrolysezelle, die in dem Behälter angeordnet ist, wobei die Einheitselektrolysezelle zwischen einer Mehrzahl planarer Elektroden definiert ist; und
   einen Elektrodenhalterrahmen (110), der die Einheitselektrolysezelle definiert, wobei der Elektrodenhalterrahmen eine Öffnung (107), um die chlorhaltige Zusammensetzung an einer Position bereitzustellen, die der Einheitselektrolysezelle entspricht, und ein Reservoirteil (108) umfasst, das in Fluidkommunikation mit der Öffnung steht, während es die chlorhaltige Zusammensetzung vor der Lieferung der chlorhaltigen Zusammensetzung an die Einheitselektrolysezelle hält;
   wobei die Gesamtfläche S der Öffnung, die zwischen dem Reservoirteil und der Einheitselektrolysezelle in Fluidkommunikation steht, nicht größer als 10 $mm^2$ ist und Rv im Bereich von 0,1 bis 8% liegt, wobei Rv dem Kapazitätsverhältnis zwischen dem Reservoirteil und dem Gesamtvolumen der Elektrodenspalte entspricht, und beide Außenflächen der äußersten planaren Elektroden durch das Verdünnungswasser gekühlt sind.

2. Elektrolysevorrichtung nach Anspruch 1, wobei zumindest zwei Öffnungen pro Einheitselektrolysezelle angeordnet sind.

3. Elektrolysevorrichtung nach einem der Ansprüche 1 oder 2, wobei die Öffnungen durch Poren aus einem porösen Material definiert sind.

4. Elektrolysevorrichtung nach einem der Ansprüche 1 bis 3, wobei das Verhältnis der Kapazität des Reservoirteils zu dem Gesamtvolumen der Spalte zwischen den Elektroden in einem Bereich von 0,1 bis 4% liegt.

5. Elektrolysevorrichtung nach einem der Ansprüche 1 bis 4, wobei die chlorhaltige Zusammensetzung aus der Gruppe gewählt ist, die aus wässriger Lösung mit Chlorwasserstoffsäure, Chloriden aus Alkalimetall oder Erdalkalimetall und jedem Gemisch davon besteht.

6. Verfahren zum Erzeugen von saurem elektrolysiertem Wasser mit einem Säuregrad zwischen pH 5 und pH 6,5, wobei das Verfahren die Schritte umfasst, dass:

   eine wässrige Lösung mit Chlorwasserstoffsäure und die chlorhaltige Zusammensetzung in die Elektrolysevorrichtung nach einem der Ansprüche 1 bis 8 geliefert werden; und
   ein Potential an die membranlose Einheitselektrolysezelle, die zwischen der Mehrzahl von planaren Elektroden definiert ist, angelegt wird, so dass die chlorhaltige Zusammensetzung elektrolysiert wird, um die elektrolysierte Lösung, die hypochlorige Säure enthält, zu erzeugen.

7. Verfahren zum Erzeugen von geringfügig saurem elektrolysiertem Wasser nach Anspruch 6, wobei die chlorhaltige Zusammensetzung eine chlorhaltige Zusammensetzung ist, die aus der Gruppe gewählt ist, die aus wässriger Lösung mit Chlorwasserstoffsäure, Chloriden aus Alkalimetall oder Erdalkalimetall und jedem Gemisch davon besteht.

## Revendications

1. Appareil d'électrolyse pour produire de l'eau électrolysée acide ayant un degré d'acidité entre pH 5 et pH 6,5, comprenant de l'acide hypochloreux par électrolyse d'une composition contenant du chlore, qui contient des ions chlorure, et ensuite dilution de la solution électrolysée, l'appareil d'électrolyse comprenant :

un récipient présentant un passage d'eau de dilution pour diluer la solution électrolysée ;
une cellule électrolytique unitaire sans diaphragme disposée dans le récipient, la cellule électrolytique unitaire étant définie entre une pluralité d'électrodes planes ; et
un cadre de support d'électrodes (110) définissant la cellule électrolytique unitaire, le cadre de support d'électrodes comprenant un orifice (107) pour fournir la composition contenant du chlore à une position correspondant à la cellule électrolytique unitaire et une partie servant de réservoir (108) en communication par fluide avec l'orifice tout en retenant la composition contenant du chlore avant de fournir la composition contenant du chlore à la cellule électrolytique unitaire ;
dans lequel la surface totale S de l'orifice de communication par fluide entre la partie servant de réservoir et la cellule électrolytique unitaire est non supérieure à 10 $mm^2$ et la valeur de Rv va 0,1 à 8 %, Rv représentant le rapport de capacités entre la partie servant de réservoir et le volume total des intervalles d'électrodes, et les deux surfaces extérieures des électrodes planes externes sont refroidies par l'eau de dilution.

2. Appareil d'électrolyse suivant la revendication 1, dans lequel au moins deux orifices sont disposés par cellule électrolytique unitaire.

3. Appareil d'électrolyse suivant l'une quelconque des revendications 1 et 2, dans lequel les orifices sont définis par les pores d'une matière poreuse.

4. Appareil d'électrolyse suivant l'une quelconque des revendications 1 à 3, dans lequel le rapport de la capacité de la partie servant de réservoir au volume total des intervalles entre les électrodes est compris dans un intervalle de 0,1 à 4 %.

5. Appareil d'électrolyse suivant l'une quelconque des revendications 1 à 4, dans lequel la composition contenant du chlore est choisie dans le groupe consistant en une solution aqueuse d'acide chlorhydrique, des chlorures de métal alcalin ou de métal alcalinoterreux et n'importe lequel de leurs mélanges.

6. Procédé pour produire de l'eau électrolysée acide ayant un degré d'acidité entre pH 5 et pH 6,5, le procédé comprenant les étapes de :

fourniture d'une solution aqueuse d'acide chlorhydrique et de la composition contenant du chlore dans l'appareil d'électrolyse suivant l'une quelconque des revendications 1 à 8 ; et
application d'un potentiel à la cellule électrolytique unitaire sans diaphragme définie entre la pluralité d'électrodes planes de telle sorte que la composition contenant du chlore soit électrolysée pour engendrer la solution électrolysée comprenant de l'acide hypochloreux.

7. Procédé pour produire de l'eau électrolysée légèrement acide suivant la revendication 6, dans lequel la composition contenant du chlore est une composition contenant du chlore choisie dans le groupe consistant en une solution aqueuse d'acide chlorhydrique, des chlorures de métal alcalin ou de métal alcalinoterreux et n'importe lequel de leurs mélanges.

Fig. 1

FIG.1

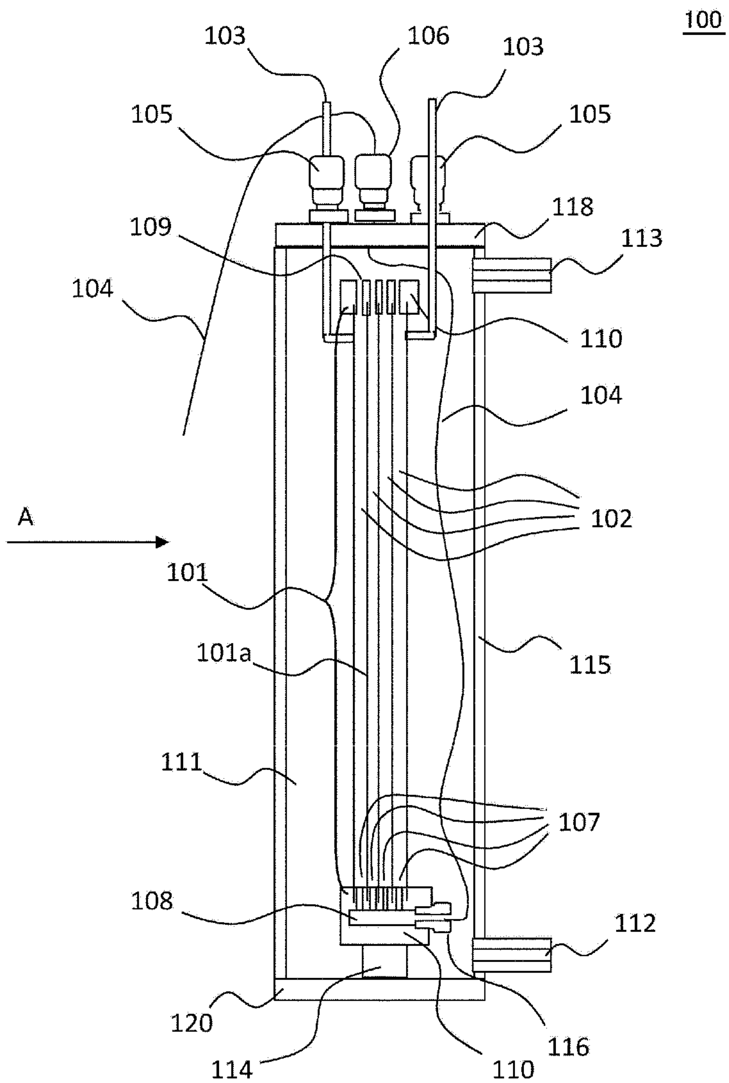
100
103
106
103
105
105
118
113
109
104
110
104
102
A
101
101a
115
111
107
108
112
120
116
114
110

Fig. 2

FIG.2

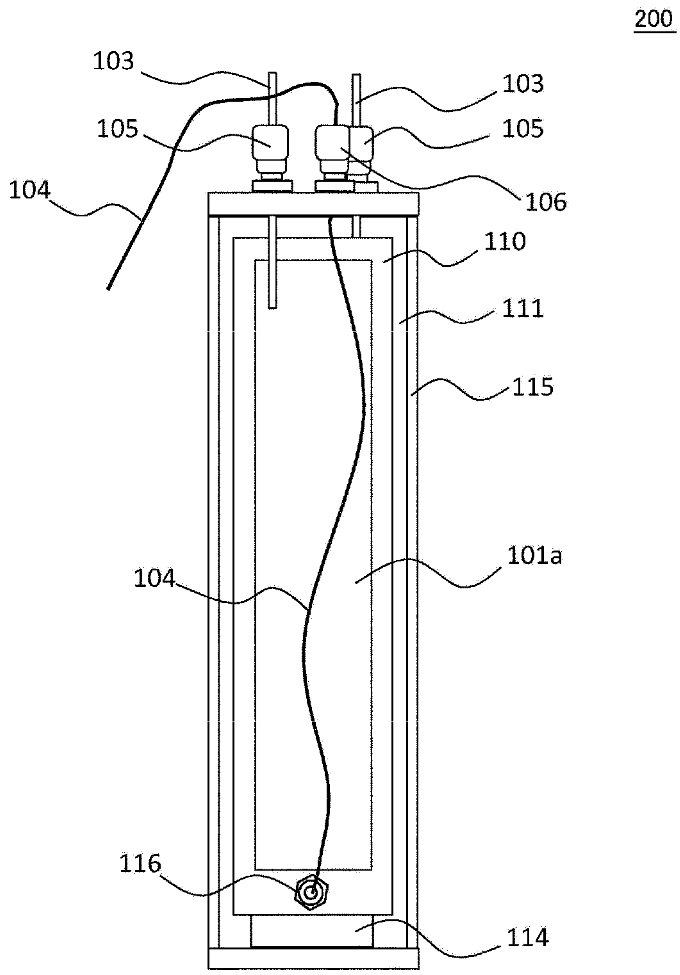

Fig. 3

FIG.3

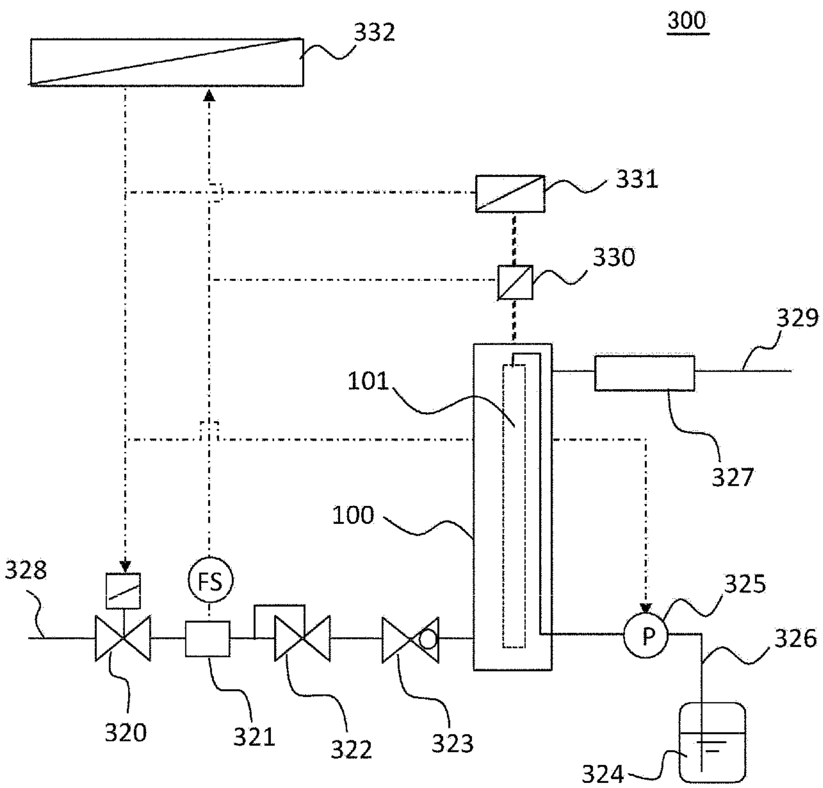
332
300
331
330
329
101
327
100
328
FS
325
P
326
320
321
322
323
324

Fig. 4

FIG.4

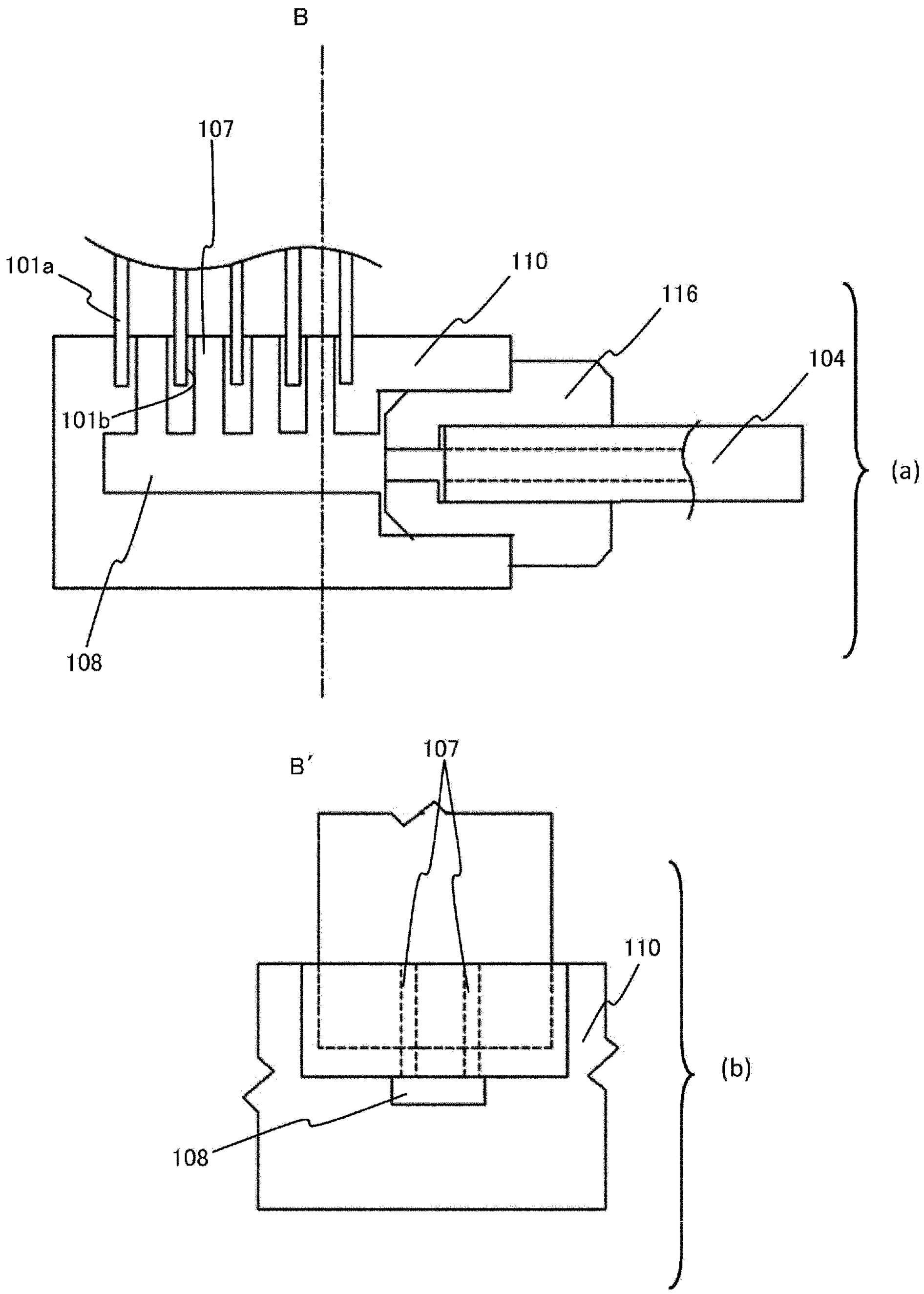

Fig. 5

FIG.5

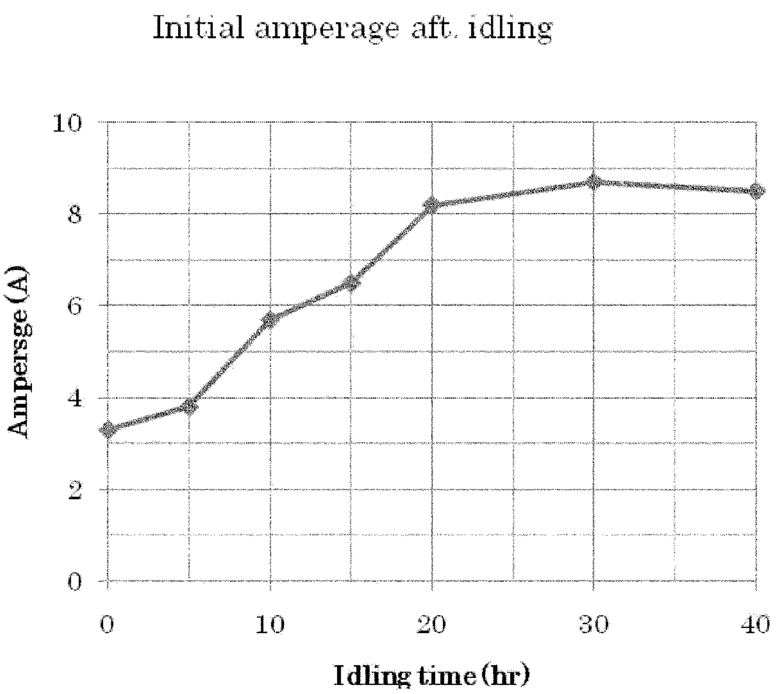
Initial amperage aft. idling
10
8
6
4
2
0
Ampersge (A)
0
10
20
30
40
Idling time (hr)

Fig. 6

FIG.6

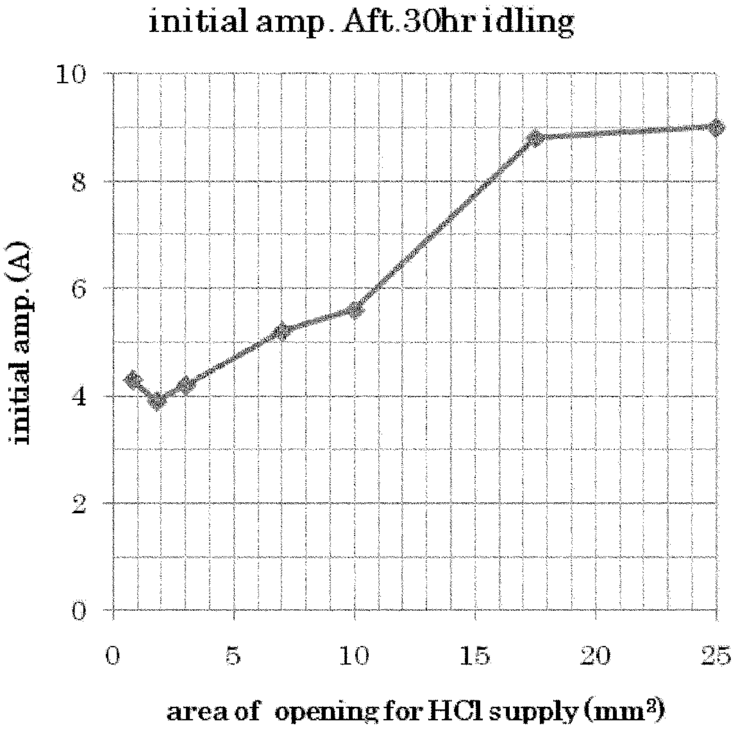
initial amp. Aft.30hr idling
initial amp. (A)
10
8
6
4
2
0
0
5
10
15
20
25
area of opening for HCl supply (mm2)

Fig. 7

FIG.7

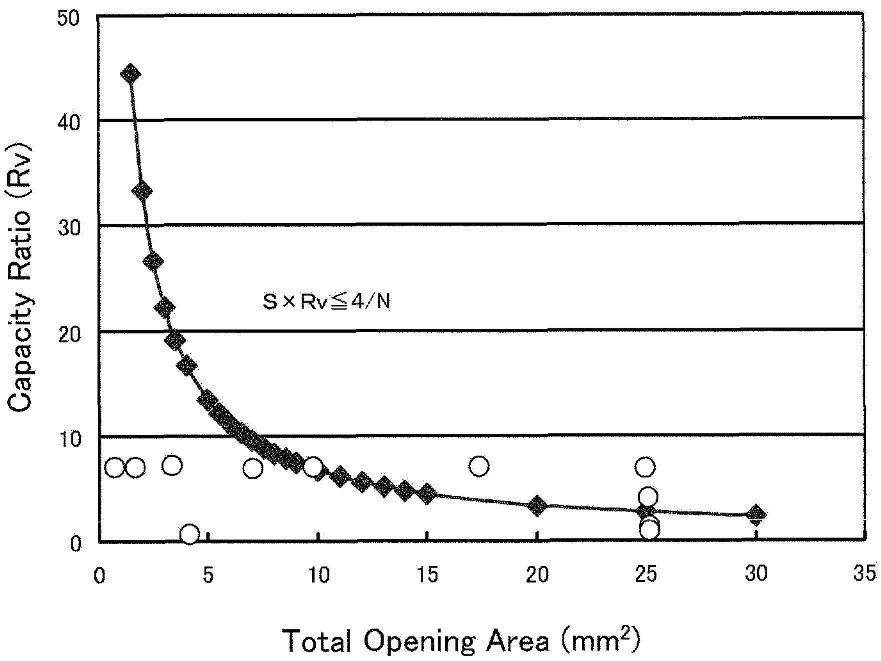
50
40
30
20
10
0
Capacity Ratio (Rv)
S×Rv≦4/N
0
5
10
15
20
25
30
35
Total Opening Area (mm2)

Fig. 8

FIG.8

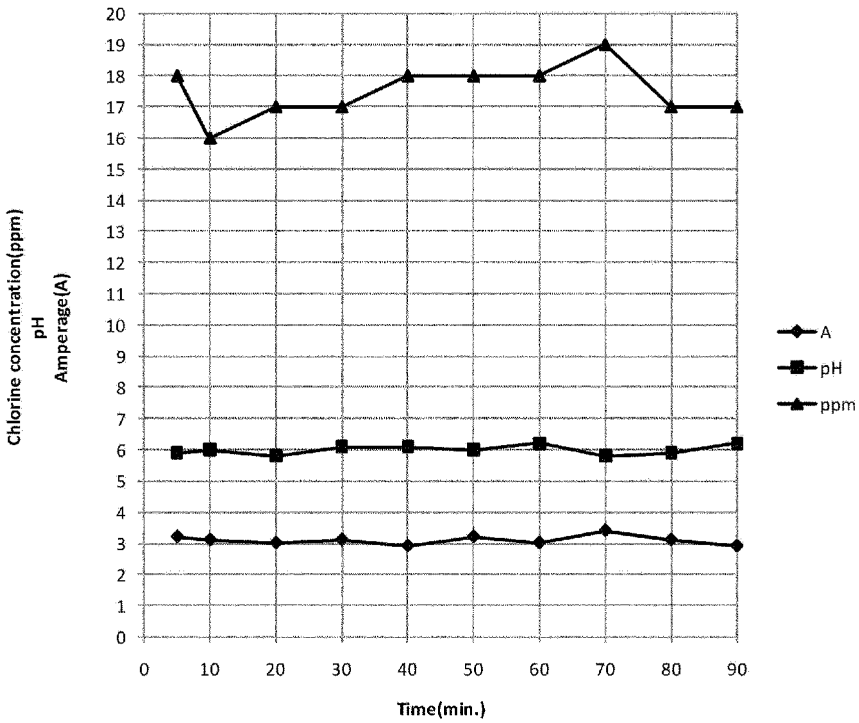
20
19
18
17
16
15
14
13
12
11
10
9
8
7
6
5
4
3
2
1
0
Chlorine concentration(ppm)
pH
Amperage(A)
0
10
20
30
40
50
60
70
80
90
Time(min.)
A
pH
ppm

Fig. 9

FIG.9

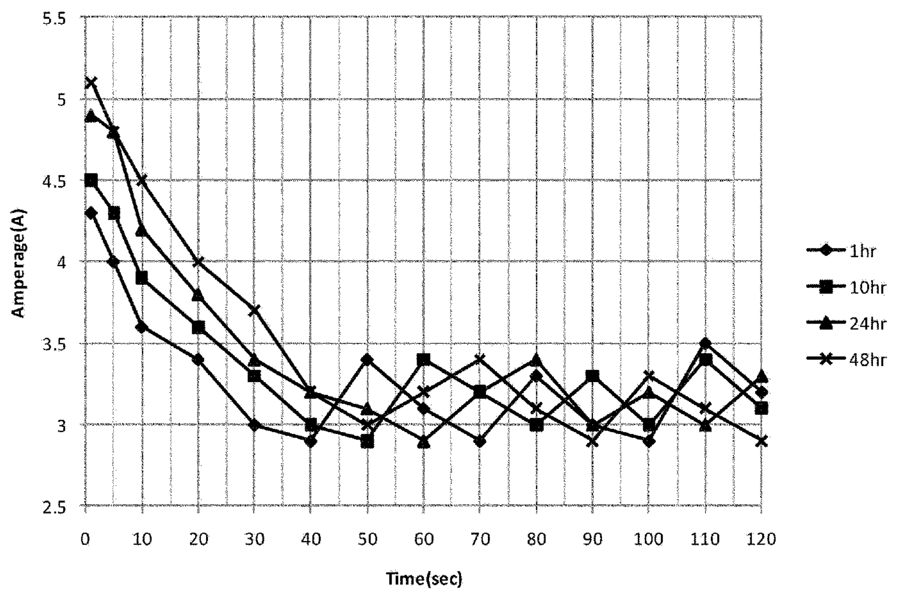
5.5
5
4.5
4
3.5
3
2.5
Amperage(A)
0
10
20
30
40
50
60
70
80
90
100
110
120
Time(sec)
1hr
10hr
24hr
48hr

Fig. 10

FIG.10

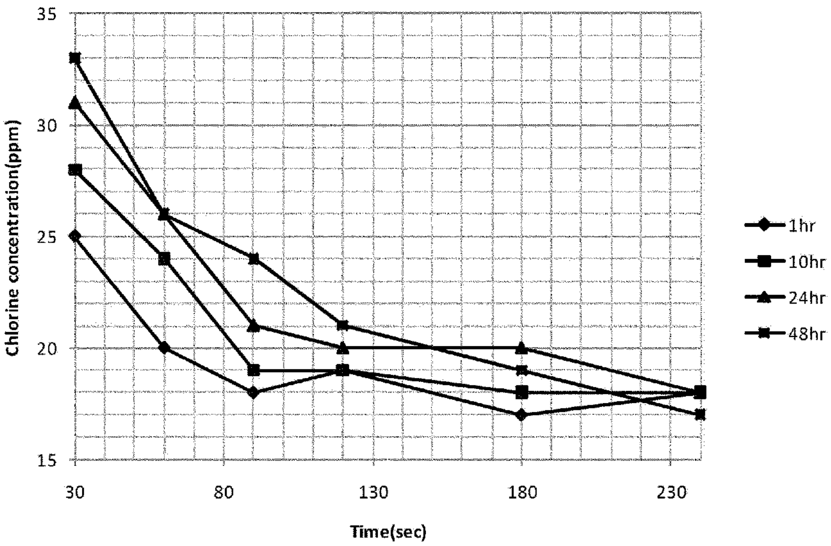
35
30
25
20
15
Chlorine concentration(ppm)
30
80
130
180
230
Time(sec)
1hr
10hr
24hr
48hr

Fig. 11

FIG.11

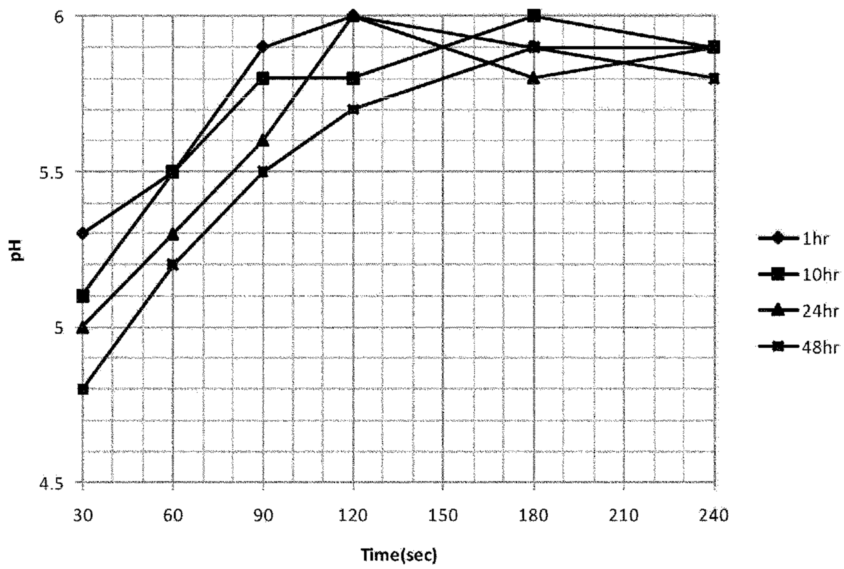
6
5.5
5
4.5
pH
30
60
90
120
150
180
210
240
Time(sec)
1hr
10hr
24hr
48hr

Fig. 12

FIG.12 (PRIOR ART)

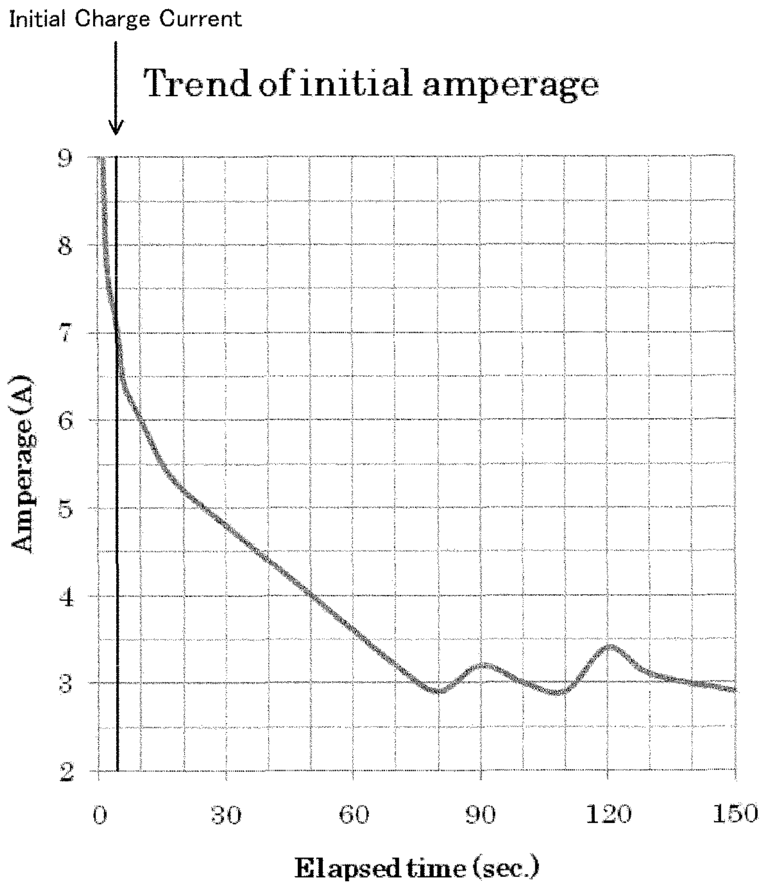

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009143629 A1
- JP H9103786 A
- JP 2001170463 A
- JP H10128336 A